# EUROPÄISCHE PATENTSCHRIFT

(11) **EP 2 788 287 B1**
(45) Veröffentlichungstag und Bekanntmachung des Hinweises auf die Patenterteilung: **01.02.2017**
(21) Anmeldenummer: 12803506.0
(22) Anmeldetag: 28.11.2012
(51) Int. Cl.: C01B 25/163, C08K 3/00, C08K 3/32

(54) **ALKALI-ALUMINIUM-MISCHPHOSPHITE, VERFAHREN ZU IHRER HERSTELLUNG SOWIE DEREN VERWENDUNG**
MIXED ALKALI-ALUMINUM PHOSPHITES, METHOD FOR PRODUCING SAME, AND THE USE THEREOF
PHOSPHITES MIXTES MÉTAL ALCALIN-ALUMINIUM, LEUR PROCÉDÉ DE FABRICATION ET LEUR UTILISATION

(30) Priorität: 05.12.2011 DE 102011120218
(43) Veröffentlichungstag der Anmeldung: 15.10.2014
(73) Patentinhaber: Clariant International Ltd, 4132 Muttenz (CH)
(72) Erfinder: HÖROLD, Sebastian, 86420 Diedorf (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/004907
(87) Internationale Veröffentlichungsnummer: WO 2013/083249

(56) Entgegenhaltungen:
- EP-A1- 0 896 023
- WO-A1-2004/048453
- JP-A- 2 175 604

## Beschreibung

Die vorliegende Erfindung betrifft Alkali-Aluminium-Mischphosphite, Verfahren zu deren Herstellung und deren Verwendung.

Nach dem Stand der Technik sind reine Aluminiumphosphite bekannt. Diese sind mikroporöse Verbindungen ähnlich Zeolithen, in denen Aluminium-Ionen und Phosphit-Ionen ein dreidimensionales Netzwerk von mehrgliedrigen Ringen bilden. Sie können Kristallwasser enthalten oder unter Verlust der Kristallstruktur Kristallwasser abgeben und Anhydrate bilden. Nach dem Stand der Technik erfolgt die Kristallisation hydrothermal, d. h. oberhalb des Siedepunktes von Wasser unter dessen Eigendruck. Zur Erleichterung der Kristallisation (Yang. Shiyou Xuebao, Shiyou Jiagong (2006), 22(Suppl.), 79-81) werden Polystickstoffverbindungen als strukturdirigierende Agenzien - auch Template genannt - zugesetzt. Diese verbleiben nachteilig im Produkt und stören bei der späteren Verwendung desselben.

Die vorliegende Erfindung betrifft, im Gegensatz zum Stand der Technik, Alkali-Aluminium-Mischphosphite. Diese enthalten Alkali-Ionen in erheblichen molaren Anteilen in der Substanz gebunden.

Der vorliegenden Erfindung liegt daher die Aufgabe zugrunde, templatfreie Alkali-Aluminium-Mischphosphite zur Verfügung zu stellen. Weiterhin bestand die Aufgabe ein Kristallisationsverfahren zur Verfügung zu stellen, welches ohne den Einsatz von Templaten auskommt.

Es wurde darüber überraschend gefunden, dass die erfindungsgemäßen Alkali-Aluminium-Mischphosphite sowie die Mischungen derselben mit Alkalisalzen als Synergisten zu Flammschutzmitteln verwendbar sind. Die Flammschutzmittelsynergisten müssen selbst nicht flammschutzaktiv sein, können aber die Wirksamkeit von Flammschutzmitteln wesentlich steigern. Diese Flammschutzmittelsynergisten werden zusammen mit Flammschutzmitteln in Flammschutzmittel-Mischungen eingesetzt. Üblicherweise werden die Flammschutzmittel-Mischungen mit weiteren Polymeradditiven durch Kneten und Extrusion mit dem flammzuschützenden Polymer vermischt. Das entstehende Polymergemisch ist dann flammgeschützt und wird später typischerweise zu Polymerformmassen oder Polymerformkörpern etc. weiterverarbeitet. Diese Verarbeitung geschieht bei Temperaturen, bei denen das Polymer geschmolzen vorliegt und die für kurze Zeit 320 °C deutlich überschreiten können. Synergisten müssen diese Temperaturen unzersetzt überstehen können. Überraschend wurde nun gefunden, dass die erfindungsgemäßen Alkali-Aluminium-Mischphosphite deutlich thermostabiler als reine Aluminiumphosphite sind, d. h. sie zersetzen sich erst bei höheren Temperaturen und unterdrücken die schädliche Phosphinbildung.

Bei den bekannten Mischungen von Aluminiumphosphiten mit Aluminiumhydroxid ist der Aktivgehalt an Aluminiumphosphit wegen der gleichzeitigen Anwesenheit des Aluminiumhydroxids herabgesetzt. Die erfindungsgemäße Aufgabe eines möglichst hohen Aktivgehaltes an Aluminiumphosphit wird auch durch die erfindungsgemäßen Alkali-Aluminium-Mischphosphite gelöst.

Weiterhin sind nach dem Stand der Technik Aluminumphosphithydrate bekannt. Nachteilig ist die bei Erhitzung eintretende Wasserabspaltung, die bei der Verarbeitung des Synergisten zum flammgeschützten Polymer hinderlich ist. Die erfindungsgemäße Aufgabe wird durch die erfindungsgemäßen Alkali-Aluminium-Mischphosphite gelöst, indem diese weitgehend Kristallwasserfrei sind.

Die Erfindung betrifft daher Alkali-Aluminium-Mischphosphite der Formel (I)

Al_{2,00}M_{z}(HPO₃)_{y}(OH)ᵥ x (H₂O)_{w} (I)

in der
- M: Alkalimetallionen,
- z: 0,01 bis 1,5,
- y: 2,63 bis 3,5,
- v: 0 bis 2,
- w: 0 bis 4
bedeutet.

Bevorzugt sind Alkali-Aluminium-Mischphosphite, in denen
- M: Na oder K,
- z: 0,10 bis 1,2,
- y: 2,75 bis 3,1,
- v: 0,05 bis 0,5,
- w: 0 bis 1
bedeutet.

Besonders bevorzugt sind Alkali-Aluminium-Mischphosphite, in denen
- M: Na,
- z: 0,15 bis 0,4,
- y: 2,80 bis 3,
- v: 0,1 bis 0,4,
- w: 0,01 bis 0,1
bedeutet.

Bevorzugt weisen die erfindungsgemäßen Alkali-Aluminium-Mischphosphite eine Teilchengröße von 0,1 bis 1000 µm,
eine Löslichkeit in Wasser von 0,01 g/l bis 10 g/l,
eine Schüttdichte von 80 bis 800 g/l,
eine Restfeuchte von 0,1 bis 5 %
und eine thermische Stabilität hinsichtlich PH₃-Bildung von 325 bis 450 °C auf.

Die Erfindung betrifft auch ein Verfahren zur Herstellung von Alkali-Aluminium-Mischphosphiten nach einem oder mehreren der Ansprüche 1 bis 4, dadurch gekennzeichnet, dass man eine Aluminiumquelle und eine Phosphitquelle in einem Lösungsmittel zur Kristallisation bringt, in dem ein stickstofffreies Lösungsmittel vorgelegt wird und die wässrige Lösung der Aluminiumquelle und eine wässrige Lösung von Alkaliphosphit gleichzeitig zugegeben werden und die wässrige Lösung von Alkaliphosphit in einer Geschwindigkeit von 10 bis 100 % der eingesetzten Phosphitmenge pro Stunde und die wässrige Lösung der Aluminiumquelle in einer Geschwindigkeit von 10 bis 100 % der eingesetzten Aluminiummenge pro Stunde zu dosiert werden.

Bevorzugt handelt es sich bei der Aluminiumquelle um Aluminiumsalze, Aluminiumchloride, -bromide, -hydroxide, -peroxide, -peroxidhydrate, -sulfite, -sulfate, -sulfathydrate, -hydrogensulfate, -peroxosulfate, -peroxodisulfate, -nitrate, -carbonate, -percarbonate, -stannate, -borate, -perborate, -perborathydrate, -formiate, -acetate, -propionate, -lactate und/oder -ascorbate und bei der Phosphitquelle um Alkalimetallphosphite, Erdalkalimetallphosphite, phosphorige Säure, Phosphortrioxid, Phosphortrichlorid und/oder Hypophosphite.

Bevorzugt wird das Verfahren zur Herstellung von Alkali-Aluminium-Mischphosphiten bei Temperaturen von 0 bis 300 °C, Reaktionszeiten von 10⁻⁷ bis 10² h und Drücken von 1 bis 200 MPa ausgeführt und die Kristallisationslösung weist einen pH von 0 bis 7 und eine Konzentration von 1 bis 50 Gew.-% Feststoff in der Suspension auf.

Die Erfindung betrifft auch die Verwendung von Alkali-Aluminium-Mischphosphiten nach einem oder mehreren der Ansprüche 1 bis 4 als Zwischenprodukt für weitere Synthesen, als Binder, als Vernetzer bzw. Beschleuniger beim Aushärten von Epoxidharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Bevorzugt ist die Verwendung von Alkali-Aluminium-Mischphosphiten nach einem oder mehreren der Ansprüche 1 bis 4 als Synergist; als Synergist in Flammschutzmittel-Mischungen und in Flammschutzmitteln, insbesondere in Flammschutzmitteln für Klarlacke und Intumeszenzbeschichtungen, in Flammschutzmitteln für Holz und andere cellulosehaltige Produkte, in reaktiven und/oder nicht reaktiven Flammschutzmitteln für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung betrifft weiterhin flammgeschützte thermoplastische oder duroplastische Polymerformmassen, Polymer-Formkörper, -Filme,- Fäden und/oder -Fasern, enthaltend 0,1 bis 45 Gew.-% Alkali-Aluminium-Mischphosphite nach einem oder mehreren der Ansprüche 1 bis 4, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Insbesondere betrifft die Erfindung flammgeschützte thermoplastische oder duroplastische Polymerformmassen, Polymer-Formkörper, -Filme, -Fäden und/oder -Fasern, enthaltend 0,1 bis 45 Gew.-% einer Flammschutzmittel-Mischung aus 0,1 bis 50 Gew.-% Alkali-Aluminium-Mischphosphiten nach einem oder mehreren der Ansprüche 1 bis 4 und 50 bis 99,9 Gew.-% Flammschutzmittel, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt enthält hierbei das Alkali-Aluminium-Mischphosphit bis zu 20 Gew.-% an Alkalisalzen.

Bevorzugt handelt es sich bei dem Flammschutzmittel in den flammgeschützten thermoplastischen oder duroplastischen Polymerformmassen, PolymerFormkörpern, -Filmen, -Fäden und/oder -Fasern um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat.

Besonders bevorzugt handelt es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat.

Bevorzugte Flammschutzmittel sind auch Aluminumhypophosphit, Zinkhypophosphit, Calciumhypophosphit, Natriumphosphit, Monophenylphosphinsäure und deren Salze, Mischungen von Dialkylphosphinsäuren und deren Salzen mit Monoalkylphosphinsäuren und deren Salzen, 2-Carboxyethyl-alkylphosphinsäure und deren Salze, 2-Carboxyethylmethylphosphinsäure und deren Salze, 2-Carboxyethyl-arylphosphinsäure und deren Salze, 2-Carboxyethylphenyl-phosphinsäure und deren Salze, Oxa-10-phosphaphenanthrene (DOPO) und dessen Salze und Addukte an para-Benzochinon bzw Itaconsäure und deren Salze.

Die erfindungsgemäßen Alkali-Aluminium-Mischphosphite weisen bevorzugt eine Teilchengröße von 1 bis 500 µm und eine Schüttdichte von 200 bis 700 g/l auf.

Die erfindungsgemäßen Alkali-Aluminium-Mischphosphite weisen bevorzugt einen L-Farbwerte von 85 bis 99,9, besonders bevorzugt von 90 bis 98 auf.

Die erfindungsgemäßen Alkali-Aluminium-Mischphosphite weisen bevorzugt einen a-Farbwerte von -4 bis +9, besonders bevorzugt von -2 bis +6, auf.

Die erfindungsgemäßen Alkali-Aluminium-Mischphosphite weisen bevorzugt einen b-Farbwerte von -2 bis +6, besonders bevorzugt von -1 bis +3, auf.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Grundsätzlich kann das erfindungsgemäße Alkali-Aluminium-Mischphosphit zusätzlich bis zu 20 Gew.-% an Alkalisalzen enthalten.

Bevorzugte Alkalisalze sind Salze mit Anionen bzw. Oxoanionen der Elemente der siebten Hauptgruppe, mit Anionen bzw. Oxoanionen der Elemente der sechsten Hauptgruppe, mit Anionen bzw. Oxoanionen der Elemente der fünften Hauptgruppe, Anionen bzw. Oxoanionen der Elemente der vierten Hauptgruppe, mit Anionen bzw. Oxoanionen der Elemente der dritten Hauptgruppe und/oder Anionen von Carbonsäuren.

Bevorzugte Aluminiumquellen sind Aluminiumsalze wie Salze mit Anionen bzw. Oxoanionen der Elemente der siebten Hauptgruppe, mit Anionen bzw. Oxoanionen der Elemente der sechsten Hauptgruppe, mit Anionen bzw. Oxoanionen der Elemente der fünften Hauptgruppe, Anionen bzw. Oxoanionen der Elemente der vierten Hauptgruppe, mit Anionen bzw. Oxoanionen der Elemente der dritten Hauptgruppe und / oder Anionen von Carbonsäuren.

Bevorzugte Anionen bzw. Oxoanionen der Elemente der siebten Hauptgruppe sind Chloride, komplexe Chloride und Bromide.

Bevorzugte Anionen bzw. Oxoanionen der Elemente der sechsten Hauptgruppe sind Hydroxide, Peroxide, Peroxidhydrate, Sulfite, Sulfate, Sulfathydrate, saure Sulfate, Hydrogensulfate, Peroxosulfate und Peroxodisulfate.

Bevorzugte Anionen bzw. Oxoanionen der Elemente der fünften Hauptgruppe sind Nitrate.

Bevorzugte Anionen bzw. Oxoanionen der Elemente der vierten Hauptgruppe sind Carbonate, Percarbonate und Stannate.

Bevorzugte Anionen bzw. Oxoanionen der Elemente der dritten Hauptgruppe sind Borate, Perborate und Perborathydrate.

Bevorzugte Anionen von Carbonsäuren sind Formiate, Acetate, Propionate, Lactate und Ascorbate.

Bevorzugte Phosphitquelle sind Alkalimetallphosphite, Erdalkalimetallphosphite, Phosphorige Säure oder Vorstufen davon.

Bevorzugte Alkalimetallphosphite sind (Di-)Natriumphosphite, Natiumhydrogenphosphite und Kaliumphosphite.

Bevorzugte Erdalkalimetallphosphite sind Calciumphosphite.

Vorstufen sind Substanzen, die unter den Bedingungen des Verfahrens Phosphitionen bilden können, z. B. Phosphortrioxid (P₂O₆), das unter Hydrolyse phosphorige Säure bilden kann, Phosphortrichlorid und Hypophosphit, das durch Oxidation in Phosphit umgewandelt werden kann.

Bevorzugte Reaktionsbedingungen sind Temperaturen von 0 bis 300 °C, besonders bevorzugt von 50 bis 170 °C und Reaktionszeiten von 10⁻⁷ bis 10² h. Der Druck kann sich zwischen 1 Pa bis 200 MPa (= 0,00001 bis 2000 bar), bevorzugt zwischen 10 Pa bis 10 MPa bewegen. Bevorzugt ist ein Energieeintrag von 0,083 bis 10 kW/m³, besonders bevorzugt von 0,33 bis 1,65 kW/m³.

Bevorzugte Lösungsmittel sind Wasser, Wasser mit pH von 0 bis 7, insbesondere mit pH von 1 bis 5, Essigsäure und protische organische Lösungsmittel.

Bevorzugte Reaktionsführung ist die Aluminiumquelle in einem Lösungsmittel vorzulegen und die Phosphitquelle zuzudosieren. Alternativ bevorzugte Reaktionsführung ist Lösungsmittel vorzulegen und Aluminiumquelle und Phosphitquelle gleichzeitig zuzudosieren.

Die Reaktionsführung bestimmt die Konzentrationen der Reaktionspartner bei der Kristallisation. Dadurch werden beispielsweise Teilchengrößen und thermische Stabilität der Produkte bestimmt.

Bevorzugt ist die Verwendung der Alkali-Aluminium-Mischphosphite und/oder deren Mischungen mit Alkalisalzen als Flammschutzmittelsynergist.

Bevorzugt sind dabei Flammschutzmittel-Mischungen enthaltend 5 bis 40 Gew.-% Alkali-Aluminium-Mischphosphite nach einem oder mehreren der Ansprüche 1 bis 4 und 60 bis 95 Gew.-% Flammschutzmittel.

Bevorzugt sind dabei auch Flammschutzmittel-Mischungen enthaltend 10 bis 30 Gew.-% Alkali-Aluminium-Mischphosphite nach einem oder mehreren der Ansprüche 1 bis 4 und 70 bis 90 Gew.-% Flammschutzmittel.

Für die vorgenannte Verwendung werden insbesondere Flammschutzmittel-Mischungen enthaltend 0,1 bis 50 Gew.-% Alkali-Aluminium-Mischphosphite nach einem oder mehreren der Ansprüche 1 bis 4 und 50 bis 99,9 Gew.-% Dialkylphosphinsäuren und/oder deren Salze eingesetzt.

Bevorzugt enthalten die Flammschutzmittel-Mischungen für die vorgenannte Verwendung 5 bis 40 Gew.-% Alkali-Aluminium-Mischphosphite nach einem oder mehreren der Ansprüche 1 bis 4 und 60 bis 95 Gew.-% Dialkylphosphinsäuren und/oder deren Salze.

Besonders bevorzugt enthalten die Flammschutzmittel-Mischungen für die vorgenannte Verwendung 10 bis 30 Gew.-% Alkali-Aluminium-Mischphosphite nach einem oder mehreren der Ansprüche 1 bis 4 und 70 bis 90 Gew.-% Dialkylphosphinsäuren und/oder deren Salze.

Bevorzugt ist eine Verwendung, bei der die Flammschutzmittel-Mischung 5 bis 99,8 Gew.-% Alkali-Aluminium-Mischphosphiten der Formel (I),
0,1 bis 94,8 Gew.-% Dialkylphosphinsäuren oder deren Salze und
0,1 bis 30 Gew.-% eines oder mehrere Polymeradditive enthält.

Bevorzugte Dialkylphosphinsäuren oder deren Salze sind Dialkylphosphinsäure-Salze der Formel (II) 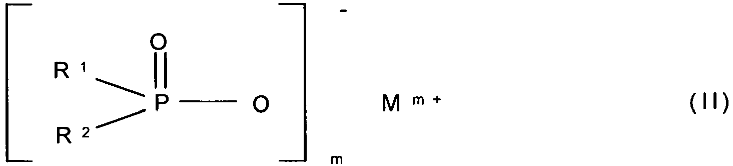 worin
- R¹, R²: gleich oder verschieden sind und C₁-C₆-Alkyl, linear oder verzweigt;
- M: Mg, Ca, Al, Sb, Sn, Ge, Ti, Fe, Zr, Zn, Ce, Bi, Sr, Mn, Li, Na, K, eine protonierte Stickstoffbase oder Wasserstoff;
- m: 1 bis 4 bedeutet.

Bevorzugte Dialkylphosphinsäure-Salze sind Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Geeignet als weitere Flammschutzmittel sind auch bestimmte stickstoffhaltige Verbindungen (DE-A-196 14 424, DE-A-197 34 437 und DE-A-197 37 727). Bevorzugt handelt es sich hierbei um solche der Formeln (III) bis (VIII) oder Gemische davon 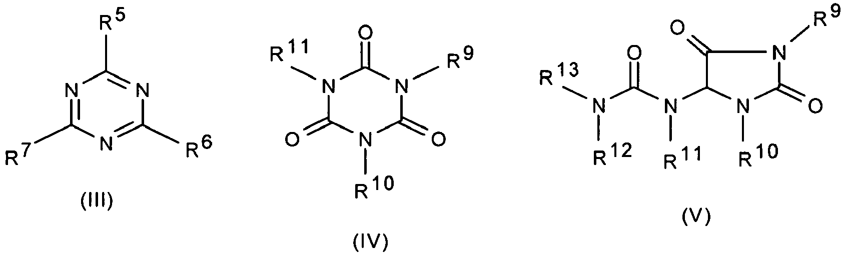 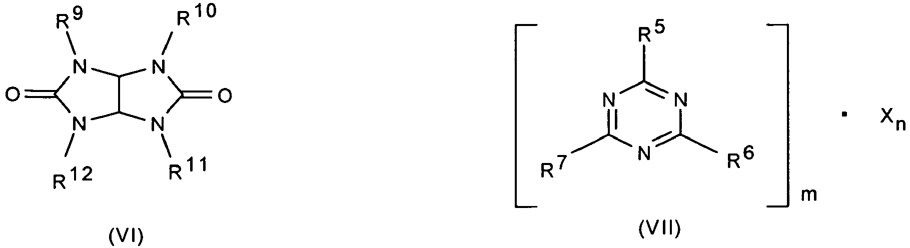 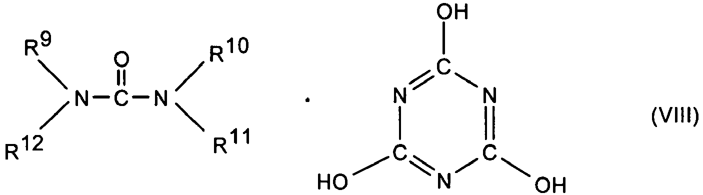 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten; oder um oligomere Ester des Tris(hydroxyethyl)isocyanurats mit aromatischen Polycarbonsäuren.

Besonders geeignete sind dabei sind Benzoguanamin, Tris(hydroxyethyl)isocyanurat, Allantoin, Glycouril, Melamin, Melamincyanurat, Dicyandiamid und/oder Guanidin.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt ist die Anwendung der erfindungsgemäßen flammgeschützten Polymer-Formkörper als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Bevorzugt enthält die Intumeszenz-Flammschutz-Beschichtung 1 bis 50 Gew.-% der erfindungsgemäßen von Alkali-Aluminium-Mischphosphiten der Formel (I) mit Alkalisalzen, sowie 50 bis 99 Gew.-% Ammoniumpolyphosphat, Bindemittel, Schaumbildner, Dialkylphosphinsäuresalze, Füllstoffe und Polymeradditive.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-Methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅ bis C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF)), Poly-(p-Methylstyrol), Poly-(alpha-Methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Sagex^{®} und Telgopor^{®}.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren auch um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6, Fa. DuPont, Zytel^{®} 101, Fa. DuPont; Durethan A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10, Fa. DuPont), Polyamid 6/12 (Poly(hexamethylendodecanediamid), Nylon^{®} 6/12, Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate sowie um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylenterephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat /thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid/Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/oder PBT/PET/PC (Polybutylenterephthalat / Polyethylenterephthalat / Polycarbonat).

Zur Herstellung von Polymerformmassen einsetzbare Compoundieraggregate sind Einwellenextruder bzw. Einschneckenextruder, z. B. der Fa. Berstorff GmbH, Hannover und der Fa. Leistritz, Nürnberg; ebenso Mehrzonenschnecken-Extruder mit Dreizonenschnecken und/oder Kurzkompressionsschnecken und Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Geeignet auch Ko-Kneter, z. B. von Fa. Coperion Buss Compounding Systems, CH-Pratteln, z. B. MDK/E46-11D und/oder Laborkneter (MDK 46 der Firma Buss, Schweiz) sowie Ring-Extruder, z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schnecken.

Geeignete Compoundieraggregate sind auch Compounder mit gegenläufiger Doppelschnecke z. B. Compex 37- bzw. -70-Typen der Fa. Krauss-Maffei Berstorff.

Erfindungsgemäße wirksame Schneckenlängen (L) sind bei Einwellenextrudern bzw. Einschneckenextrudern 20 bis 40D; bei Mehrzonenschneckenextudern z. B. 25D mit Einzugzone (L=10D), Übergangszone (L=6D), Ausstoßzone (L=9D) und bei Doppelschneckenextrudern 8 bis 48D.

Herstellung, Verarbeitung und Prüfung von flammgeschützten Kunststoffformmassen und Kunststoff-Formkörpern.

Die Flammschutzkomponenten wurden mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt. Nach UL 94 ergeben sich folgende Brandklassen:
V-0: Kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende.
V-1: Kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0.
V-2: Zündung der Watte durch brennendes Abtropfen, übrige Kriterien wie bei V-1.
Nicht klassifizierbar (nkl): Erfüllt nicht die Brandklasse V-2.

### Zusammensetzung der Mischungen von Alkali-Aluminium-Mischphosphiten

Der nach Analyse vorliegende Sulfatgehalt wird als Alkalisalzgehalt gerechnet (z. B. Natriumsulfat). Verbleibendes Rest-Alkali (hier Natrium), Aluminium und Phosphor (wird als Phosphit gerechnet) werden zu einer Summenformel umgerechnet. Die lonenbilanz wird in Form von Hydroxidionen hergestellt. Diese Ergebnisse sind in den Tabellen 1 bis 3 wiedergegeben.

### Test der thermischen Stabilität und Phosphinbildung

Ein wichtiges Kriterium für die thermische Stabilität der erfindungsgemäßen Mischungen von Alkali-Aluminium-Mischphosphiten ist die Temperatur bei der Zersetzung eintritt und giftiges Phosphin (PH₃) gebildet wird. Dessen Freisetzung muss bei der Herstellung von flammgeschützten Polymeren absolut vermieden werden. Zur Bestimmung wird eine Materialprobe in einem Röhrenofen unter strömendem Stickstoff (30 I/h) erhitzt, indem die Temperatur stufenweise angehoben wird. Die Zersetzungstemperatur ist erreicht, wenn mit einem Nachweisröhrchen der Fa. Dräger mehr als 1 ppm PH₃ (Kurzzeitröhrchen auf Phosphorwasserstoff) nachgewiesen werden kann.

Die Erfindung wird durch die nachstehenden Beispiele erläutert. Einsatzmengen, Bedingungen, Ausbeuten und Analysen sind in den Tabellen 1 bis 3 wiedergegeben.

### Beispiel 1

1080 g Wasser werden im 4-Liter-Fünfhalskolben auf 100 °C erhitzt und gerührt. Dann pumpt man innerhalb von 2 Stunden gleichzeitig 2 mol Aluminiumsulfat-Lösung (AI-Gehalt 4,4 Gew.-%), der 349 g 25 %ige Schwefelsäure zugesetzt ist und 3 mol Natriumphosphit-Lösung (39 %ig) zu. Man rührt 20 h bei 100 °C nach. Der Feststoff wird abfiltriert, mit heißem voll-entsalztem (VE)-Wasser gewaschen und getrocknet. Nach weiterem Trocknen bei 220 °C unter Stickstoff enthält das Produkt noch 0,3 % Restfeuchte (Muffelofen bei 300 °C, 1 h). Das Produkt ist röntgenamorph. Das ³¹P-NMR zeigt 100 % Phosphit-Gehalt an. In hoher Ausbeute wird ein erfindungsgemäßes Alkali-Aluminium-Mischphosphit mit sehr hoher thermischer Stabilität (PH₃-Bildung ab 360 °C) erhalten.

### Beispiel 2

Analog zu Beispiel 1 wird Wasser vorgelegt; Aluminiumsulfatlösung und Natriumphosphitlösung, der 25 %ige Natronlauge zugesetzt ist, werden bei 100 °C unter Rühren während 2 h zudosiert und 16 h nachgerührt. Der pH der Suspension ist 4 und die nominelle Feststoffkonzentration beträgt 5,6 Gew.-%. In hoher Ausbeute wird ein erfindungsgemäßes Alkali-Aluminium-Mischphosphit mit sehr hoher thermischer Stabilität (PH₃-Bildung ab 360 °C) erhalten.

### Beispiel 3

Analog zu Beispiel 1 werden 2 mol Aluminiumsulfatlösung und 3 mol festes Natriumphosphit bei 100 °C 6 h gerührt. Die Feststoffkonzentration ist 22,8 Gew.-%. In hoher Ausbeute wird ein erfindungsgemäßes Alkali-Aluminium-Mischphosphit mit sehr hoher thermischer Stabilität (PH₃-Bildung ab 360 °C) erhalten.

### Beispiel 4

3251 g Wasser werden in einem 16 I-Hochdruckrührbehälter vorgelegt, erhitzt und gerührt. Während 3 h werden gleichzeitig 6 mol (3694 g) Aluminiumsulfat-Lösung und 9 mol (3055 g) Natriumphosphit-Lösung zudosiert. Die Suspension wird abgelassen und bei 80 °C filtriert, mit heißem Wasser gewaschen, redispergiert und nochmals gewaschen. Der Filterkuchen wird in einem Reaktortherm-Trockner bei 220 °C getrocknet. In sehr hoher Ausbeute wird ein erfindungsgemäßes Alkali-Aluminium-Mischphosphit mit sehr hoher thermischer Stabilität (PH₃-Bildung ab 380 °C) erhalten.

### Beispiel 5

Analog zu Beispiel 1 wird bei 80 °C Wasser vorgelegt, Aluminumsulfat- und Natriumphosphitlösung innerhalb 2 h gleichzeitig zudosiert und 22 h nachgerührt. In hoher Ausbeute wird ein erfindungsgemäßes Alkali-Aluminium-Mischphosphit mit sehr hoher thermischer Stabilität (PH₃-Bildung ab 360 °C) erhalten.

### Beispiel 6

Analog zu Beispiel 4 wird bei 120 °C Wasser vorgelegt und innerhalb 1 h Aluminumsulfat- und Natriumphosphitlösung zudosiert. In 89 %-iger Ausbeute wird ein erfindungsgemäßes Alkali-Aluminium-Mischphosphit mit sehr hoher thermischer Stabilität (PH₃-Bildung ab 360 °C) erhalten.

### Beispiel 7

Analog zu Beisiel 4 wird bei 155 °C Wasser vorgelegt und innerhalb 0,5 h Aluminumsulfat- und Natriumphsosphitlösung zudosiert. Die Ausbeute beträgt 85 % und die thermische Stabilität (PH₃-Bildung ab 360 °C) des Produkts ist sehr hoch.

### Beispiel 8

Analog zu Beispiel 1 wird bei 100 °C Wasser vorgelegt und innerhalb 2 h Aluminumsulfat- und Natriumphosphitlösung im Überschuss zudosiert und 22 h nachgerührt. In guter Ausbeute wird ein erfindungsgemäßes Alkali-Aluminium-Mischphosphit mit sehr hoher thermischer Stabilität (PH₃-Bildung ab 360 °C) erhalten.

### Beispiel 9 (Vergleich)

Analog zu Beispiel 1 wird bei 100 °C Wasser vorgelegt und innerhalb 2 h Aluminumsulfatlösung im Überschuss und Natriumphsophitlösung zudosiert. Die Ausbeute und die thermische Stabilität (PH₃-Bildung ab 340 °C) sind verringert, die Zusammensetzung ist nicht erfindungsgemäß.

### Beispiel 10 (Vergleich)

Nicht erfindungsgemäßes, käufliches Aluminumphosphit zeigt im Vergleich eine geringere thermische Stabiltät (PH₃-Bildung ab 320 °C).

**Tabelle 1: Reaktionsbedingungen und Einsatzmengen**

| Beispiel | Wasser | Alumnium-Quelle | PhosphitQuelle | H₂SO₄ 25% | NaOH 25% | Zeit | Temperatur | pH | Feststoffkonzentration |
|---|---|---|---|---|---|---|---|---|---|
| | [g] | [mol] | [mol] | [g] | [g] | [h] | [°C] | | [%] |
| 1 | 1080 | 2 | 3 | 349 | | 22 | 100 | 1 | 10,0 |
| 2 | 1080 | 0,5 | 0,75 | | 5 | 18 | 100 | 4 | 5,6 |
| 3 | 0 | 2 | 3 | | | 6 | 100 | 2,8 | 22,8 |
| 4 | 3251 | 6 | 9 | | | 3 | 155 | 3,1 | 11,0 |
| 5 | 1080 | 2 | 3 | | | 24 | 80 | 2,6 | 11,0 |
| 6 | 3251 | 6 | 9 | | | 1 | 120 | 2,8 | 11,0 |
| 7 | 3251 | 6 | 9 | | | 0,5 | 155 | 2,4 | 11,0 |
| 8 | 1080 | 2 | 3,3 | | | 24 | 100 | - | 11,8 |
| 9 (Vgl.) | 1080 | 2 | 2,7 | | | 24 | 100 | - | 10,2 |
| 10 (Vgl.) | - | - | - | | | | | | |

**Tabelle 2: Ausbeuten**

| Beispiel | Ausbeute | PH₃-Bildungstemperatur | Restfeuchte | P-Gehalt | Al-Gehalt | Na-Gehalt | SO₄-Gehalt |
|---|---|---|---|---|---|---|---|
| | [%] | [°C] | [Gew.%] | [Gew.%] | [Gew.%] | [Gew.%] | [Gew.%] |
| 1 | 95 | 360 | 0,3 | 30,7 | 17,9 | 2,3 | 0,5 |
| 2 | 94 | 360 | 0,35 | 32,4 | 17,0 | 1,2 | 0,23 |
| 3 | 96 | 360 | 1,8 | 27,5 | 16,8 | 4,2 | 5,9 |
| 4 | 98 | 380 | 0,27 | 30,7 | 18,0 | 1,5 | 0,29 |
| 5 | 93 | 360 | 1,13 | 29,7 | 18,3 | 0,7 | 1,2 |
| 6 | 89 | 360 | 0,49 | 29,0 | 18,5 | 1,9 | 1,9 |
| 7 | 87 | 360 | 0,70 | 30,4 | 19,3 | 1,1 | 0,3 |
| 8 | 93 | 360 | 3,61 | 24,8 | 16,4 | 8,5 | 1,0 |
| 9 (Vgl.) | 75 | 340 | 4,90 | 24,3 | 18,3 | 0,1 | 13,4 |
| 10 (Vgl.) | | 320 | 0,00 | 31,62 | 18,36 | 0,0 | 0,0 |

**Tabelle 3: Zusammensetzungen der Endprodukte**

| Beispiel | Verhältnis P / Al | Alkali-Aluminium-Mischphosphit Summenformel | A | B |
|---|---|---|---|---|
| | [mol / mol] | | [Gew.%] | [Gew.%] |
| 1 | 1,50 | Al_{2,00}Na_{0,3}(HPO₃)_{2,99}(OH)_{0,32} | 99,0 | 0,7 |
| 2 | 1,53 | Al_{2,00}Na_{0,14}(HPO₃)_{3,06}(OH)_{0,02} | 99,3 | 0,3 |
| 3 | 1,42 | Al_{2,00}Na_{0,19}(HPO₃)_{2,85}(OH)_{0,49} | 89,4 | 8,9 |
| 4 | 1,49 | Al_{2,0}Na_{0,18}(HPO₃)_{2,97}(OH)_{0,24} | 99,3 | 0,4 |
| 5 | 1,41 | Al_{2,00}Na_{0,02}(HPO₃)_{2,83}(OH)_{0,36} | 97,1 | 1,8 |
| 6 | 1,37 | Al_{2,00}Na_{0,13}(HPO₃)_{2,73}(OH)_{0,66} | 96,7 | 2,8 |
| 7 | 1,37 | Al_{2,00}Na_{0,12}(HPO₃)_{2,74}(OH)_{0,63} | 98,9 | 0,4 |
| 8 | 1,32 | Al_{2,00}Na_{1,15}(HPO₃)_{2,63}(OH)_{1,88} | 94,9 | 1,5 |
| 9 (Vgl.) | 1,16 | - | - | - |
| 10 (Vgl.) | 1,50 | Al₂(HPO₃)₃ | - | - |

| | | | | |
|---|---|---|---|---|
| A: Alkali-Aluminium-Mischphosphit und Alkalisalz: AAP-Gehalt B: Alkali-Aluminium-Mischphosphit und Alkalisalz: Alkalisalz-Gehalt (hier Natriumsulfat) | | | | |

Die sehr geringe Differenz (bei der Addition von A und B) zu 100 Gew.-% entspricht dem sehr geringen Restfeuchte- oder Kristallwassergehalt und geht in die Summenformel (I) mit sehr kleinem Index w ein.

### Herstellung von flammgeschützten Polymerformmassen und Polymerformkörpern

Mit 50 Gew.-% Polyamid 66-Polymer, 30 Gew.-% Glasfasern, 3,6 Gew.-% Alkali-Aluminium-Mischphosphit nach Beispiel 4 und 16,4 Gew.-% Aluminumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

Mit 50 Gew.-% Polybutylenterephthalat-Polymer, 30 Gew.-% Glasfasern, 3,6 Gew.-% Alkali-Aluminium-Mischphosphit nach Beispiel 4 und 16,4 Gew.-% Aluminumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

## Patentansprüche

1. Alkali-Aluminium-Mischphosphite der Formel (I)
Al_{2,00}Mz(HPO₃)_{y}(OH)ᵥ x (H₂O)_{w} (I)
in der
M Alkalimetallionen,
z 0,01 bis 1,5,
y 2,63 bis 3,5,
v 0 bis 2,
w 0 bis 4
bedeutet.

2. Alkali-Aluminium-Mischphosphite nach Anspruch 1, **dadurch gekennzeichnet, dass**
M Na oder K,
z 0,10 bis 1,2,
y 2,75 bis 3,1,
v 0,05 bis 0,5,
w 0 bis 1
bedeutet.

3. Alkali-Aluminium-Mischphosphite nach Anspruch 1 oder 2, **dadurch gekennzeichnet, dass**
M Na,
z 0,15 bis 0,4,
y 2,80 bis 3,
v 0,1 bis 0,4,
w 0,01 bis 0,1
bedeutet.

4. Alkali-Aluminium-Mischphosphite nach einem oder mehreren der Ansprüche 1 bis 3, **dadurch gekennzeichnet, dass** sie
eine Teilchengröße von 0,1 bis 1000 µm,
eine Löslichkeit in Wasser von 0,01 g/l bis 10 g/l,
eine Schüttdichte von 80 bis 800 g/l,
eine Restfeuchte von 0,1 bis 5 %
und eine thermische Stabilität hinsichtlich PH₃-Bildung von 325 bis 450 °C aufweisen.

5. Verfahren zur Herstellung von Alkali-Aluminium-Mischphosphiten nach einem oder mehreren der Ansprüche 1 bis 4, **dadurch gekennzeichnet, dass** man eine Aluminiumquelle und eine Phosphitquelle in einem Lösungsmittel zur Kristallisation bringt, in dem ein stickstofffreies Lösungsmittel vorgelegt wird und die Aluminiumquelle und die Phosphitquelle gleichzeitig zugegeben werden und die Phosphitquelle in einer Geschwindigkeit von 10 bis 100 % der eingesetzten Phosphitmenge pro Stunde und die Aluminiumquelle in einer Geschwindigkeit von 10 bis 100 % der eingesetzten Aluminiummenge pro Stunde zu dosiert werden, und wobei es sich bei der Aluminiumquelle um Aluminiumsalze, Aluminiumchloride, -bromide, -hydroxide, -peroxide, -peroxidhydrate, -sulfite, -sulfate, -sulfathydrate, -hydrogensulfate, -peroxosulfate, -peroxodisulfate, -nitrate, -carbonate, -percarbonate, -stannate, -borate, -perborate, -perborathydrate, -formiate, -acetate, -propionate, -lactate und/oder -ascorbate und bei der Phosphitquelle um Alkalimetallphosphite handelt.

6. Verfahren nach Anspruch 5, **dadurch gekennzeichnet, dass** es bei Temperaturen von 0 bis 300 °C, Reaktionszeiten von 10⁻⁷ bis 10² h und Drücken von 1 bis 200 MPa ausgeführt wird und die Kristallisationslösung einen pH von 0 bis 7 und eine Konzentration von 1 bis 50 Gew.-% Feststoff in der Suspension aufweist.

7. Verwendung von Alkali-Aluminium-Mischphosphiten nach einem oder mehreren der Ansprüche 1 bis 4 als Zwischenprodukt für weitere Synthesen, als Binder, als Vernetzer bzw. Beschleuniger beim Aushärten von Epoxidharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

8. Verwendung von Alkali-Aluminium-Mischphosphiten nach einem oder mehreren der Ansprüche 1 bis 4 als Synergist; als Synergist in Flammschutzmittel-Mischungen und in Flammschutzmitteln, insbesondere in Flammschutzmitteln für Klarlacke und Intumeszenzbeschichtungen, in Flammschutzmitteln für Holz und andere cellulosehaltige Produkte, in reaktiven und/oder nicht reaktiven Flammschutzmitteln für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

9. Flammgeschützte thermoplastische oder duroplastische Polymerformmassen, Polymer-Formkörper, -Filme,- Fäden und/oder -Fasern enthaltend 0,1 bis 45 Gew.-% Alkali-Aluminium-Mischphosphite nach einem oder mehreren der Ansprüche 1 bis 4, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

10. Flammgeschützte thermoplastische oder duroplastische Polymerformmassen, Polymer-Formkörper, -Filme,- Fäden und/oder-Fasern enthaltend 0,1 bis 45 Gew.-% einer Flammschutzmittel-Mischung aus 0,1 bis 50 Gew.-% Alkali-Aluminium-Mischphosphite nach einem oder mehreren der Ansprüche 1 bis 4 und 50 bis 99,9 Gew.-% Flammschutzmittel, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

11. Flammgeschützte thermoplastische oder duroplastische Polymerformmassen, Polymer-Formkörper, -Filme,- Fäden und/oder -Fasern nach Anspruch 9 oder 10, **dadurch gekennzeichnet, dass** das Alkali-Aluminium-Mischphosphit bis zu 20 Gew.-% an Alkalisalze enthält.

12. Flammgeschützte thermoplastische oder duroplastische Polymerformmassen, Polymer-Formkörper, -Filme,- Fäden und/oder-Fasern nach Anspruch 10 oder 11, **dadurch gekennzeichnet, dass** es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

13. Flammgeschützte thermoplastische oder duroplastische Polymerformmassen, Polymer-Formkörper, -Filme,- Fäden und/oder-Fasern nach ein Anspruch 10 oder 11, **dadurch gekennzeichnet, dass** es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat handelt.

14. Flammgeschützte thermoplastische oder duroplastische Polymerformmassen, Polymer-Formkörper, -Filme,- Fäden und/oder -Fasern nach Anspruch 10 oder 11, **dadurch gekennzeichnet, dass** es sich bei dem Flammschutzmittel um Aluminumhypophosphit, Zinkhypophosphit, Calciumhypophosphit, Natriumphosphit, Monophenylphopshinsäure und deren Salze, Mischungen von Dialkylphosphinsäuren und deren Salzen und Monoalkylphosphinsäuren und deren Salzen, 2-Carboxyethyl-alkylphosphinsäure und deren Salze, 2-Carboxyethyl-methylphosphinsäure und deren Salze, 2-Carboxyethyl-arylphosphinsäure und deren Salze, 2-Carboxyethylphenylphosphinsäure und deren Salze, Oxa-10-phosphaphenanthrene (DOPO) und dessen Salze und Addukte an para-Benzochinon bzw Itaconsäure und deren Salze handelt.

## Claims

1. A mixed alkali metal/aluminum phosphite of the formula (I)
Al_{2.00}M_{z}(HPO₃)_{y}(OH)ᵥ x (H₂O)_{w} (I)
in which
M represents alkali metal ions,
z is 0.01 to 1.5,
y is 2.63 to 3.5,
v is 0 to 2,
w is 0 to 4.

2. A mixed alkali metal/aluminum phosphite as claimed in claim 1, wherein
M isNaorK,
z is 0.10 to 1.2,
y is 2.75 to 3.1,
v is 0.05 to 0.5,
w is 0 to 1.

3. A mixed alkali metal/aluminum phosphite as claimed in claim 1 or 2, wherein
M is Na,
z is 0.15 to 0.4,
y is 2.80 to 3,
v is 0.1 to 0.4,
w is 0.01 to 0.1.

4. A mixed alkali metal/aluminum phosphite as claimed in one or more of claims 1 to 3, which has
a particle size of 0.1 to 1000 µm,
a solubility in water of 0.01 g/l to 10 g/l,
a bulk density of 80 to 800 g/l,
a residual moisture content of 0.1 to 5%
and a thermal stability with respect to PH₃ formation of 325 to 450°C.

5. A process for preparing mixed alkali metal/aluminum phosphites as claimed in one or more of claims 1 to 4, which comprises crystallizing an aluminum source and a phosphite source in a solvent, by initially charging a nitrogen-free solvent and adding the aluminum source and the phosphite source simultaneously, and metering in the phosphite source at a rate of 10 to 100% of the amount of phosphite used per hour and the aluminum source at a rate of 10 to 100% of the amount of aluminum used per hour, and wherein the aluminum source comprises aluminum salts, aluminum chlorides, bromides, hydroxides, peroxides, peroxide hydrates, sulfites, sulfates, sulfate hydrates, hydrogensulfates, peroxosulfates, peroxodisulfates, nitrates, carbonates, percarbonates, stannates, borates, perborates, perborate hydrates, formates, acetates, propionates, lactates and/or ascorbates, and the phosphite source comprises alkali metal phosphites, alkaline earth metal phosphites.

6. The process as claimed in claim 5, which is executed at temperatures of 0 to 300°C, reaction times of 10⁻⁷ to 10² h and pressures of 1 to 200 MPa, and wherein the crystallization solution has a pH of 0 to 7 and a concentration of 1 to 50% by weight of solids in the suspension.

7. The use of mixed alkali metal/aluminum phosphites as claimed in one or more of claims 1 to 4 as an intermediate for further syntheses, as a binder, as a crosslinker or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications, and in electronics applications.

8. The use of mixed alkali metal/aluminum phosphites as claimed in one or more of claims 1 to 4 as a synergist; as a synergist in flame retardant mixtures and in flame retardants, especially in flame retardants for clearcoats and intumescent coatings, in flame retardants for wood and other cellulosic products, in reactive and/or nonreactive flame retardants for polymers, for production of flame-retardant polymer molding compositions, for production of flame-retardant polymer moldings and/or for rendering polyester and pure and blended cellulose fabrics flame-retardant by impregnation.

9. A flame-retardant thermoplastic or thermoset polymer molding composition or polymer molding, film, filament and/or fiber comprising 0.1 to 45% by weight of mixed alkali metal/aluminum phosphites as claimed in one or more of claims 1 to 4, 55 to 99.9% by weight of thermoplastic or thermoset polymer or mixtures thereof, 0 to 55% by weight of additives and 0 to 55% by weight of filler or reinforcing materials, where the sum of the components is 100% by weight.

10. A flame-retardant thermoplastic or thermoset polymer molding composition or polymer molding, film, filament and/or fiber comprising 0.1 to 45% by weight of a flame retardant mixture composed of 0.1 to 50% by weight of mixed alkali metal/aluminum phosphites as claimed in one or more of claims 1 to 4 and 50 to 99.9% by weight of flame retardant, 55 to 99.9% by weight of thermoplastic or thermoset polymer or mixtures thereof, 0 to 55% by weight of additives and 0 to 55% by weight of filler or reinforcing materials, where the sum of the components is 100% by weight.

11. The flame-retardant thermoplastic or thermoset polymer molding composition or polymer molding, film, filament and/or fiber as claimed in claim 9 or 10, wherein the mixed alkali metal/aluminum phosphite contains up to 20% by weight of alkali metal salts.

12. The flame-retardant thermoplastic or thermoset polymer molding composition or polymer molding, film, filament and/or fiber as claimed in claim 10 or 11, wherein the flame retardant comprises dialkylphosphinic acids and/or salts thereof; condensation products of melamine and/or reaction products of melamine with phosphoric acid and/or reaction products of condensation products of melamine with polyphosphoric acid or mixtures thereof; nitrogen-containing phosphates of the formulae (NH₄)_{y} H₃-_{y} PO₄ and (NH₄ PO₃)_{z}, where y is 1 to 3 and z is 1 to 10 000; benzoguanamine, tris(hydroxyethyl) isocyanurate, allantoin, glycoluril, melamine, melamine cyanurate, dicyandiamide and/or guanidine; magnesium oxide, calcium oxide, aluminum oxide, zinc oxide, manganese oxide, tin oxide, aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

13. The flame-retardant thermoplastic or thermoset polymer molding composition or polymer molding, film, filament and/or fiber as claimed in claim 10 or 11, wherein the flame retardant comprises melam, melem, melon, dimelamine pyrophosphate, melamine polyphosphate, melam polyphosphate, melon polyphosphate and/or melem polyphosphate and/or mixed poly salts thereof and/or ammonium hydrogenphosphate, ammonium dihydrogenphosphate and/or ammonium polyphosphate.

14. The flame-retardant thermoplastic or thermoset polymer molding composition or polymer molding, film, filament and/or fiber as claimed in claim 10 or 11, wherein the flame retardant comprises aluminum hypophosphite, zinc hypophosphite, calcium hypophosphite, sodium phosphite, monophenylphosphinic acid and salts thereof, mixtures of dialkylphosphinic acids and salts thereof and monoalkylphosphinic acids and salts thereof, 2-carboxyethylalkylphosphinic acid and salts thereof, 2-carboxyethylmethylphosphinic acid and salts thereof, 2-carboxyethylarylphosphinic acid and salts thereof, 2-carboxyethylphenylphosphinic acid and salts thereof, oxa-10-phosphaphenanthrene (DOPO) and salts thereof and adducts onto para-benzoquinone, or itaconic acid and salts thereof.

## Revendications

1. Phosphites mixtes de métal alcalin et d'aluminium de formule (I)
Al_{2,00}Mz(HPO₃)_{y}(OH)ᵥ x (H₂O)_{w} (I)
où
M signifie des ions de métal alcalin
z signifie 0,01 à 1,5,
y signifie 2,63 à 3,5,
v signifie 0 à 2,
w signifie 0 à 4.

2. Phosphites mixtes de métal alcalin et d'aluminium selon la revendication 1, **caractérisés en ce que**
M signifie Na ou K,
z signifie 0,10 à 1,2,
y signifie 2,75 à 3,1,
v signifie 0,05 à 0,5,
w signifie 0 à 1.

3. Phosphites mixtes de métal alcalin et d'aluminium selon la revendication 1 ou 2, **caractérisés en ce que**
M signifie Na,
z signifie 0,15 à 0,4,
y signifie 2,80 à 3,
v signifie 0,1 à 0,4,
w signifie 0,01 à 0,1.

4. Phosphites mixtes de métal alcalin et d'aluminium selon l'une ou plusieurs des revendications 1 à 3, **caractérisés en ce qu'**ils présentent
une grosseur de particule de 0,1 à 1000 µm,
une solubilité dans l'eau de 0,01 g/l à 10 g/l,
une densité apparente de 80 à 800 g/l,
une humidité résiduelle de 0,1 à 5%,
et une stabilité thermique en ce qui concerne la formation de PH₃ de 325 à 450°C.

5. Procédé pour la préparation de phosphites mixtes de métal alcalin et d'aluminium selon l'une ou plusieurs des revendications 1 à 4, **caractérisé en ce qu'**on fait cristalliser une source d'aluminium et une source de phosphite dans un solvant, **en ce qu'**un solvant exempt d'azote est disposé au préalable et la source d'aluminium et la source de phosphite sont ajoutés simultanément et la source de phosphite est dosée à une vitesse de 10 à 100% de la quantité de phosphite utilisée par heure et la source d'aluminium est dosée à une vitesse de 10 à 100% de la quantité d'aluminium utilisée par heure et où il s'agit, pour la source d'aluminium, de sels d'aluminium, de chlorures, de bromures, d'hydroxydes, de peroxydes, de peroxydes hydratés, de sulfites, de sulfates, de sulfates hydratés, d'hydrogénosulfates, de peroxosulfates, de peroxodisulfates, de nitrates, de carbonates, de percarbonates, de stannates, de borates, de perborates, de perborates hydratés, de formiates, d'acétates, de propionates, de lactates et/ou d'ascorbates d'aluminium et, pour la source de phosphite, de phosphites de métal alcalin.

6. Procédé selon la revendication 5, **caractérisé en ce qu'**il est réalisé à des températures de 0 à 300°C, à des temps de réaction de 10⁻⁷ à 10² h et à des pressions de 1 à 200 MPa et la solution de cristallisation présente un pH de 0 à 7 et une concentration de 1 à 50% en poids de solides dans la suspension.

7. Utilisation de phosphites mixtes de métal alcalin et d'aluminium selon l'une ou plusieurs des revendications 1 à 4 comme produit intermédiaire pour d'autres synthèses, comme liant, comme réticulant ou, selon le cas, accélérateur lors du durcissement de résines époxydes, de polyuréthanes et de résines de polyester insaturées, comme stabilisants de polymères, comme agents de phytoprotection, comme agents de séquestration, comme additif d'huile minérale, comme agent de protection contre la corrosion, dans des utilisations d'agents de lavage et de nettoyage et dans des applications électroniques.

8. Utilisation de phosphites mixtes de métal alcalin et d'aluminium selon l'une ou plusieurs des revendications 1 à 4 comme synergiste ; comme synergiste dans des mélanges d'agents ignifuges et dans des agents ignifuges, en particulier dans des agents ignifuges pour des laques claires et des revêtements intumescents, dans des agents ignifuges pour bois et d'autres produits contenant de la cellulose, dans des agents ignifuges réactifs et/ou non réactifs pour polymères, pour la préparation de masses de moulage polymères ignifugées, pour la préparation de corps façonnés polymères ignifugés et/ou pour l'apprêt inhibant les flammes de polyesters et de tissus en cellulose pure et de tissus mixtes à base de cellulose par imprégnation.

9. Masses de moulage polymères, corps façonnés, films, fils et/ou fibres polymères thermoplastiques ou thermodurcissables, ignifugés, contenant 0,1 à 45% en poids de phosphites mixtes de métal alcalin et d'aluminium selon l'une ou plusieurs des revendications 1 à 4, 55 à 99,9% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

10. Masses de moulage polymères, corps façonnés, films, fils et/ou fibres polymères thermoplastiques ou thermodurcissables, ignifugés, contenant 0,1 à 45% en poids d'un mélange d'agents ignifuges constitué par 0,1 à 50% de phosphites mixtes de métal alcalin et d'aluminium selon l'une ou plusieurs des revendications 1 à 4 et 50 à 99,9% en poids d'agents ignifuges, 55 à 99,9% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

11. Masses de moulage polymères, corps façonnés, films, fils et/ou fibres polymères thermoplastiques ou thermodurcissables, ignifugés selon la revendication 9 ou 10, **caractérisés en ce que** le phosphite mixte de métal alcalin et d'aluminium contient jusqu'à 20% en poids de sels de métal alcalin.

12. Masses de moulage polymères, corps façonnés, films, fils et/ou fibres polymères thermoplastiques ou thermodurcissables, ignifugés selon la revendication 10 ou 11, **caractérisés en ce qu'**il s'agit, pour l'agent ignifuge, d'acides dialkylphosphiniques et/ou de leurs sels ; de produits de condensation de la mélamine et/ou de produits de transformation de la mélamine avec de l'acide phosphorique et/ou de produits de transformation de produits de condensation de la mélamine avec du poly(acide phosphorique) ou de mélanges de ceux-ci ; de phosphates contenant de l'azote des formules (NH₄)_{y}H₃-_{y}PO₄ ou (NH₄PO₃)_{z}, y valant 1 à 3 et z valant 1 à 10.000 ; de benzoguanamine, d'isocyanurate de tris(hydroxyéthyle), d'allantoïne, de glyco-urile, de mélamine, de cyanurate de mélamine, de dicyanodiamide et/ou de guanidine ; d'oxyde de magnésium, d'oxyde de calcium, d'oxyde d'aluminium, d'oxyde de zinc, d'oxyde de manganèse, d'oxyde d'étain, d'hydroxyde d'aluminium, de boehmite, de dihydrotalcite, d'hydrocalumite, d'hydroxyde de magnésium, d'hydroxyde de calcium, d'hydroxyde de zinc, d'oxyde d'étain hydraté, d'hydroxyde de manganèse, de borate de zinc, de silicate de zinc basique et/ou de stannate de zinc.

13. Masses de moulage polymères, corps façonnés, films, fils et/ou fibres polymères thermoplastiques ou thermodurcissables, ignifugés selon la revendication 10 ou 11, **caractérisés en ce qu'**il s'agit, pour l'agent ignifuge, de mélam, de mélem, de mélon, de pyrophosphate de dimélamine, de polyphosphate de mélamine, de polyphosphate de mélam, de polyphosphate de mélon et/ou de polyphosphate de mélem et/ou de polysels mixtes de ceux-ci et/ou d'hydrogénophosphate d'ammonium, de dihydrogénophosphate d'ammonium et/ou de polyphosphate d'ammonium.

14. Masses de moulage polymères, corps façonnés, films, fils et/ou fibres polymères thermoplastiques ou thermodurcissables, ignifugés selon la revendication 10 ou 11, **caractérisés en ce qu'**il s'agit, pour l'agent ignifuge, d'hypophosphite d'aluminium, d'hypophosphite de zinc, d'hypophosphite de calcium, de phosphite de sodium, d'acide monophénylphosphinique et de ses sels, de mélanges d'acides dialkylphosphiniques et de leurs sels avec des acides monoalkylphosphiniques et leurs sels, d'acide 2-carboxyéthylalkylphosphinique et de ses sels, d'acide 2-carboxyéthylméthylphosphinique et de ses sels, d'acide 2-carboxyéthylarylphosphinique et de ses sels, d'acide 2-carboxyéthylphénylphosphinique et de ses sels, d'oxa-10-phosphaphénanthrène (DOPO) et de ses sels et de produits d'addition sur de la para-benzoquinone ou sur de l'acide itaconique et de leurs sels.
